**Europäisches Patentamt**

**European Patent Office**

**Office européen des brevets**

(19)

(11) Veröffentlichungsnummer: **0 023 635**

**B1**

(12) **EUROPÄISCHE PATENTSCHRIFT**

(45) Veröffentlichungstag der Patentschrift :
24.11.82

(21) Anmeldenummer : 80104188.0

(22) Anmeldetag : 17.07.80

(51) Int. Cl.³ : **C 08 L 77/00, C 08 K 9/04,
C 08 K 3/16, C 08 K 3/24,
C 08 K 3/34**

(54) **Gefüllte Polyamidformmasse.**

(30) Priorität : 04.08.79 DE 2931738

(43) Veröffentlichungstag der Anmeldung :
11.02.81 (Patentblatt 81/06)

(45) Bekanntmachung des Hinweises auf die Patenterteilung : 24.11.82 Patentblatt 82/47

(84) Benannte Vertragsstaaten :
CH DE FR GB IT LI NL

(56) Entgegenhaltungen :
DE A 1 694 629
DE A 2 505 244

(73) Patentinhaber : BASF Aktiengesellschaft
Carl-Bosch-Strasse 38
D-6700 Ludwigshafen (DE)

(72) Erfinder : Theysohn, Rainer, Dr.
Bruesseler Ring 38
D-6700 Ludwigshafen (DE)
Erfinder : Dorst, Hans Georg, Dr.
Berliner Strasse 23
D-6705 Deidesheim (DE)
Erfinder : Seiler, Erhard, Dr.
Erpolzheimer Strasse 1
D-6700 Ludwigshafen (DE)
Erfinder : Zahradnik, Franz, Dr.
Schwedlerstrasse 120
D-6700 Ludwigshafen (DE)

# 0 023 635

## Gefüllte Polyamidformmasse

Die vorliegende Erfindung betrifft eine Polyamidformmasse, die feinteiliges, wasserfreies Aluminiumsilikat als Füllstoff enthält, mit verbesserter Zähigkeit und Oberflächengüte.

Es ist bekannt, Polyamide mit Füllstoffen auszurüsten, um die Steifigkeit, die Wärmeformbeständigkeit oder auch die Oberflächenhärte der Formmassen zu verbessern. Füllstoffe haben im Gegensatz zu den ebenfalls verstärkend wirkenden Glasfasern den Vorteil, daß die Formmassen ein isotropes Schwindungs- und Verzugsverhalten aufweisen. Nachteilig bei Füllstoff enthaltenden Polyamidformmassen ist jedoch ihre geringe Zähigkeit, vor allem bei höheren Gehalten an Füllstoff, da durch Kerbwirkung der Füllstoffteilchen die Festigkeitseigenschaften des Polyamids erheblich beeinträchtigt werden. Darüber hinaus zeigen Formteile vor allem aus hochgefüllten Polyamiden oftmals an der Oberfläche ungleichförmige Mattstellen und gelegentlich auch sogenannte « Auskreidungen », die ihre Verwendbarkeit z.B. bei Sichtteilen erheblich einschränken.

Nach der DE-OS 19 65 434 kann man die mechanischen Eigenschaften, vor allem die Zähigkeit von gefüllten Polyamiden dadurch verbessern, daß man den Verstärkerfüllstoff mit Organosilanverbindungen beschichtet und damit eine bessere Haftung erzielt. In speziellen Fällen, z.B. bei sehr feinteiligen Füllstoffen mit großer spezifischer Oberfläche, ist es jedoch auch hier wünschenswert, das Zähigkeitsniveau, insbesondere die multiaxiale Bruchzähigkeit, noch weiter anzuheben.

Bezüglich der Verbesserung der Oberflächenqualität gefüllter Formkörper aus Polyamid wurde in der US-PS 3 931 094 vorgeschlagen, geringe Mengen an Glasfasern zusätzlich zum Füllstoff zuzusetzen. Das hat jedoch bei der Herstellung der Formmassen einen zusätzlichen Aufwand bei der Dosierung und Vorratshaltung zur Folge.

Es ist ferner bekannt, daß Polyamide durch Zusatz von Kupferverbindungen stabilisiert werden können. Nach der US-PS 2 705 227 soll das Kupfer in gelöster Form im Polyamid vorliegen, vorzugsweise als Kupfer(II)-acetat, zusammen mit einem Alkali- oder Erdalkalihalogenid. Nach der DE-AS 11 70 639 wird in Polyamide Kupfer(I)-jodid zusammen mit einem Alkalijodid eingearbeitet. In den DE-OS 25 16 565 und 26 43 204 wird empfohlen, Kupfer(I)-halogenide zusammen mit Alkali- oder Erdalkalihalogeniden als homogene Konzentrate einzusetzen, wenn man die Stabilität von Polyamiden noch weiter verbessern will.

Es wurde nun gefunden, daß eine Polyamidformmasse, die 5 bis 130 Gew.teile (bezogen auf 100 Gew.teile Polyamid) eines silanbehandelten anorganischen Füllstoffes, 5 bis 500 ppm (bezogen auf Polyamid) Kupfer, sowie gegebenenfalls übliche Zusatzstoffe und Hilfsmittel enthält, dann eine erhöhte Zähigkeit und verbesserte Oberflächenqualität aufweist, wenn der Füllstoff ein Aluminiumsilikat ist, welches 50 bis 56 Gew.% $SiO_2$ und 42 bis 46 Gew.% $Al_2O_3$ enthält, und eine spezifische Oberfläche von mehr als 6 $m^2/g$ aufweist, und wenn das Kupfer der Formmasse in Form eines homogenen Konzentrats aus Polyamid, einem Salz des einwertigen Kupfers und einem Alkali- oder Erdalkalihalogenid zugesetzt wurde.

Die verwendeten Polyamide sind bevorzugt gesättigte, lineare Polyamide mit einem K-Wert (gemessen nach Fikentscher, Cellulosechemie 13 (1932), Seite 58, in 1 %-iger Lösung in konzentrierter Schwefelsäure) von 60 bis 80. Geeignet sind z.B. Polycaprolactam (Polyamid-6), Polyhexamethylenadipinsäureamid (Polyamid-6,6), Polyhexamethylensebazinsäureamid, Polylaurinlactam, Polyundecanamid ; ferner Homo- und Copolyamide, die unter Verwendung von Adipinsäure, Azelainsäure, Sebazinsäure, Dodecandisäure, Terephthalsäure einerseits und Hexamethylendiamin, Trimethylhexamethylendiamin, Bis-(4-aminocyclohexyl)-methan, 2,2-Bis-(4'-aminocyclohexyl)-propan andererseits hergestellt werden ; sowie Copolyamide, die durch Polykondensation von Lactamen zusammen mit den oben genannten Dicarbonsäuren und Diaminen erhalten werden. Bevorzugt sind Polyamid-6 und Polyamid-6,6.

Die Füllstoffe sind wasserfreie Al-Silikate, die durch thermische Dehydratisierung von Kaolin oder Kaolinit bei Temperaturen zwischen 800 und 1 110 °C erhalten werden können. Ihre Mohs-Härte soll vorzugsweise kleiner als 5 sein. Die Partikelgröße soll bevorzugt zwischen 0,01 μm und 10 μm, vorzugsweise 0,05 μm und 3 μm liegen, die spezifische Oberfläche ist größer als 6 $m^2/g$, vorzugsweise größer als 10 $m^2/g$.

Als Modifizierungsmittel für die Füllstoffe werden Silane vom Typ $R-CH_2-CH_2-CH_2-Si-(O-R')_3$ bevorzugt, bei denen R eine Aminogruppe bzw. ein Rest mit mehreren Aminogruppen, eine Epoxigruppe oder eine ein- oder mehr funktionelle Estergruppe darstellt. R' ist eine Methyl- oder Äthylgruppe. Der Füllstoff wird vorzugsweise direkt mit dem Silan beschichtet. Es ist aber auch möglich, das Silan entweder in Substanz oder in Form eines leicht handhabbaren rieselfähigen Konzentrates, z.B. auf Basis von wasserfreiem Al-Silikat oder Ca-Silikat, das mindestens 40 Gew.% an Silan enthält, bei der Herstellung der Formmassen zuzugeben.

Als Salze des einwertigen Kupfers kommen vorzugsweise Kupfer(I)-Acetat, Kupfer(I)-Chlorid, -Bromid und -Jodid in Frage. Sie sind in Mengen von 5 bis 500 ppm Kupfer, vorzugsweise 10 bis 250 ppm, bezogen auf Polyamid, enthalten. Die vorteilhaften Eigenschaften werden dann erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid oder Erdalkalihalogenid in Form einer festen, homogenen Lösung enthält. Ein typisches Konzentrat besteht z.B. aus 79 bis 95 Gew.% Polyamid und 21 bis 5 Gew.% eines Gemisches aus Kupferjodid oder -bromid und Kaliumjodid oder

2

Calciumbromid. Die Konzentration der festen homogenen Lösung an Kupfer liegt bevorzugt zwischen 0,3 und 1,2, insbesondere zwischen 0,5 und 0,9 Gew.%, bezogen auf das Gesamtgewicht der Lösung, und das molare Verhältnis von Kupfer(I)-Jodid zu Kaliumjodid liegt zwischen 1 und 11,5, vorzugsweise zwischen 1 und 4,2. Geeignete Polyamide für das Konzentrat sind Homopolyamide und Copolyamide, insbesondere Polyamid-6 und Polyamid-6,6. Bei Verwendung von Polyamid-6 wird das Verhältnis von Kupfer(I)-Jodid zu Kaliumjodid zweckmäßigerweise so gewählt, daß die feste Lösung bei Durchführung der dynamischen Kristallisation einen Kristallisationsbeginn $< 175\,°C$ und ein Kristallisationsmaximum zwischen $167\,°C$ und $135\,°C$ besitzt (Aufschmelzzeit : 0,5 min bei $250\,°C$, Abkühlgeschwindigkeit : 32 °C/min).

Die erfindungsgemäßen Formmassen können noch übliche Zusatzstoffe und Hilfsmittel, wie z.B. UV-, Hitze- oder Hydrolysestabilisatoren auf Phenol- oder Aminbasis enthalten, ferner Schmier-, Gleit- und Trennmittel, Farbpigmente und Flammschutzmittel. Das Polyamid kann im Sinne einer weiteren Zähigkeitsverbesserung polymermodifiziert sein, z.B. mit Copolymeren des Äthylens, die gegebenenfalls Carboxylgruppen enthalten können.

Die Herstellung der erfindungsgemäßen Formmassen erfolgt auf den einschlägig bekannten Maschinen zur Herstellung gefüllter Thermoplaste, wie z.B. Einwellen- oder Zweiwellen-Extrudern oder Schneckenknetern. In der Regel geht man hierbei von Polyamidgranulat aus, das mit den entsprechenden Mengen Stabilisatorkonzentrat, sowie gegebenenfalls den Zuschlagstoffen, mechanisch abgemischt wurde, und schmilzt die Mischung bei Temperaturen zwischen $260\,°C$ und $310\,°C$ auf. Das Aluminiumsilikat, das silanbeschichtet ist, sofern das Silan nicht bereits mit dem Polyamid abgemischt wurde, wird zweckmäßigerweise an der gleichen Stelle zudosiert wie das Polyamidgranulat, eine Zugabe in bereits aufgeschmolzenes Polymeres ist jedoch auch möglich. Sowohl die Vorratseinrichtung für das wasserfreie Aluminiumsilikat als auch die Einarbeitungsmaschine können mit einer Vorrichtung versehen sein, die es erlaubt, einen Unterdruck anzulegen.

Die homogene schmelzgemischte Formmasse wird zu Strängen extrudiert, gekühlt und granuliert. Die Granulate können dann einer weiteren Verarbeitung im Spritzguß oder Extrusion zugeführt werden.

Die in den Beispielen genannten Prozente beziehen sich auf das Gewicht.

## Beispiel 1

Auf einem Zweischnecken-Kneter (Typ ZSK der Fa. Werner und Pfleiderer) wurden zudosiert : a) Polyamid-6 vom K-Wert 71, b) ein Stabilisatorkonzentrat auf Basis von Polyamid-6, welches 1 % CuBr und 10 % $CaBr_2$ enthielt, c) wasserfreies Aluminiumsilikat (44,5 % $Al_2O_3$, 52,3 % $SiO_2$) der spezifischen Oberfläche 18 bis 20 $m^2/g$, welches mit 0,5 % γ-Aminopropyltriäthoxysilan beschichtet war. Die Mengen wurden so gewählt, daß die Mischung 40 % des Füllstoffes und 40 ppm Kupfer enthielt.

Das Polyamid wurde bei Temperaturen zwischen 260 und $290\,°C$ aufgeschmolzen und mit dem Füllstoff homogen schmelzgemischt. Zur Entgasung wurde in der Mitte des Extruders ein Unterdruck von 67 mbar angelegt. Die homogene Mischung wurde in Strängen ausgetragen, unter den Schmelzpunkt des Polyamids abgekühlt, granuliert und getrocknet.

Aus dem Granulat wurden Prüfkörper bei Temperaturen von $280\,°C$ spritzgegossen, an denen die Schlagzähigkeit nach DIN 53 453 und die Bruchzähigkeit nach DIN 53 443, Blatt 1, an Rundscheiben $2 × 60$ mm bestimmt wurden. Die Rundscheiben wurden auch einer visuellen Begutachtung ihrer Oberfläche unterworfen. Die Ergebnisse sind in der Tabelle aufgeführt.

## Beispiel 2

Es wurde wie in Beispiel 1 gearbeitet, wobei jedoch Polyamid-6,6 mit einem K-Wert von 69 verwendet wurde und als Stabilisatorkonzentrat eine feste homogene Lösung von 2 % CuJ und 8 % KJ in Polyamid-6.

## Beispiel 3

Es wurde wie in Beispiel 2 gearbeitet, wobei jedoch ein Füllstoff eingesetzt wurde, der nicht silanbeschichtet war.

## Beispiel 4

Es wurde wie in Beispiel 2 gearbeitet, wobei jedoch kein Stabilisatorkonzentrat zugesetzt wurde.

## Beispiel 5

Es wurde wie in Beispiel 2 gearbeitet, wobei jedoch das Kupferjodid und das Kaliumjodid nicht als Konzentrat zugesetzt wurden, sondern in Form ihrer kristallinen Salze auf das Polyamid aufgetrommelt wurden.

3

**0 023 635**

### Beispiel 6

Es wurde wie in Beispiel 2 gearbeitet, wobei jedoch als Füllstoff ein wasserfreies Aluminiumsilikat (mit 43 % $Al_2O_3$ und 54 % $SiO_2$) der spezifischen Oberfläche von 2 bis 5 m²/g eingesetzt wurde.

### Beispiel 7

Es wurde wie in Beispiel 6 gearbeitet, wobei jedoch kein Stabilisatorkonzentrat zugesetzt wurde.

### Beispiel 8

Es wurde wie in Beispiel 2 gearbeitet, wobei jedoch als Füllstoff ein wasserfreies Magnesiumsilikat (mit 31,8 % MgO und 63,0 % $SiO_2$) der spezifischen Oberfläche von 10 bis 14 m²/g eingesetzt wurde.

### Beispiel 9

Es wurde wie in Beispiel 8 gearbeitet, wobei jedoch kein Stabilisatorkonzentrat zugesetzt wurde.

Die Beispiele 3 bis 9 sind nicht erfindungsgemäß. Die folgende Tabelle zeigt, daß die erfindungsbegründenden Effekte überraschenderweise nur dann auftreten, wenn man ein wasserfreies Aluminiumsilikat einer spezifischen Oberfläche größer als 6 m²/g verwendet, und wenn man den Stabilisator in Form eines Konzentrats einsetzt.

### Tabelle

| Bsp. | Schlagzähigkeit [KJm⁻²] | Bruchzähigkeit [Nm] | Oberfläche von Rundscheiben |
|---|---|---|---|
| 1 | 125,0 | 26,5 | glatt, leichte Markierungen in Angußnähe |
| 2 | 118,5 | 22,7 | glatt, leichte Markierungen in Angußnähe |
| 3 | 55,0 | 0,52 | matt, leichte Markierungen in Angußnähe |
| 4 | 84,5 | 5-15 | matt, Schlieren in Bereich des Angußes |
| 5 | 92,3 | 7-18 | glatte Oberfläche, wenig Markierungen um den Anguß |
| 6 | 65,0 | 5,5 | glatte Oberfläche, wenige Markierungen |
| 7 | 66,9 | 5,6 | matte Oberfläche, leichte Markierungen |
| 8 | 22,7 | 1,54 | glatte Oberfläche |
| 9 | 20,2 | 1,52 | glatte Oberfläche |

**Anspruch**

Thermoplastische Formmasse auf Basis von linearen Polyamiden, die 5 bis 130 Gew.teile (bezogen auf 100 Gew.teile Polyamid) eines silanmodifizierten anorganischen Füllstoffes, 5 bis 500 ppm (bezogen auf Polyamid) Kupfer, sowie gegebenenfalls übliche Zusatzstoffe und Hilfsmittel enthält, dadurch gekennzeichnet, daß der Füllstoff ein wasserfreies Aluminiumsilikat ist, welches 50 bis 56 Gew.% $SiO_2$ und 42 bis 46 Gew.% $Al_2O_3$ enthält, durch thermische Dehydratisierung von Kaolin oder Kaolinit bei Temperaturen zwischen 800 und 1 100 °C erhalten werden kann und eine spezifische Oberfläche von mehr als 6 m²/g aufweist, und daß das Kupfer der Formmasse in Form eines homogenen Konzentrats aus Polyamid, einem Salz des einwertigen Kupfers und einem Alkali- oder Erdalkalihalogenid zugesetzt wurde.

**Claim**

A thermoplastic moulding composition based on linear polyamides, which contains from 5 to 130 parts by weight (based on 100 parts by weight of polyamide) of a silane-modified inorganic filler, from 5 to 500 ppm (based on polyamide) of copper, with or without conventional additives and auxiliaries, characterized in that the filler is an anhydrous aluminium silicate which contains 50 to 56 % by weight of $SiO_2$ and 42 to 46 % by weight of $Al_2O_3$, can be obtained by thermal dehydration of kaolin or kaolinite at temperatures of from 800° to 1 100 °C, and has a specific surface area of more than 6 m²/g, and that the copper was added to the moulding composition in the form of a homogeneous concentrate consisting of polyamide, a salt of monovalent copper, and an alkali or alkaline earth halide.

4

## 0 023 635

### Revendication

Matière à mouler thermoplastique à base de polyamides linéaires, qui contient 5 à 130 parties en poids (rapportées à 100 parties en poids de polyamide) d'une charge inorganique modifiée par du silane, 5 à 500 ppm (rapportées au polyamide) de cuivre, ainsi qu'éventuellement des additifs et auxiliaires usuels, caractérisée par le fait que la charge est un silicate d'aluminium anhydre, qui contient 50 à 56 % en poids de $SiO_2$ et 42 à 46 % en poids d'$Al_2O_3$, peut être obtenue par déshydratation thermique de kaolin ou kaolinite à des températures comprises entre 800 et 1 100 °C, et présente une surface spécifique de plus de 6 $m^2$/g, et que le cuivre a été ajouté à la matière à mouler sous forme d'un concentré homogène de polyamide, d'un sel de cuivre monovalent et d'un halogénure alcalin ou alcalino-terreux.